# FASCICULE DE BREVET EUROPEEN

(11) **EP 3 604 007 B1**
(45) Date de publication et mention de la délivrance du brevet: **24.05.2023**
(21) Numéro de dépôt: 19187057.5
(22) Date de dépôt: 18.07.2019
(51) Int. Cl.: B60J 5/06, E05D 15/10

(54) **DISPOSITIF DE GUIDAGE D'UN OUVRANT DE VÉHICULE**
FÜHRUNGSVORRICHTUNG EINES ÖFFNUNGESELEMENTS EINES FAHRZEUGS
DEVICE FOR GUIDING A DOOR OF A VEHICLE

(30) Priorité: 03.08.2018 FR 1857300
(43) Date de publication de la demande: 05.02.2020
(73) Titulaire: Renault s.a.s, 92100 Boulogne Billancourt (FR)
(72) Inventeur: HEWAK, GREGOR, 95490 VAUREAL (FR); FARINOTTE, Elise, 75015 PARIS (FR)
(74) Mandataire: Renault Group

(56) Documents cités:
- JP-A- 2007 315 078
- JP-B2- 3 742 016
- US-A- 5 507 119
- US-A- 5 921 613
- US-A1- 2009 194 348
- US-A1- 2012 031 004
- US-B1- 6 382 705

## Description

L'invention concerne un dispositif de guidage d'un ouvrant de véhicule automobile. L'invention concerne également un agencement comprenant un tel dispositif. L'invention concerne encore une structure de caisse comprenant un tel agencement et/ou un tel dispositif. L'invention concerne encore un véhicule automobile comprenant une telle structure de caisse et/ou un tel agencement et/ou un tel dispositif. L'invention concerne enfin un procédé de fonctionnement d'un tel dispositif ou d'un tel agencement ou d'une telle structure de caisse ou d'un tel véhicule automobile.

JP2007315078A décrit un dispositif de guidage d'une porte latérale sur une caisse comprenant un système à quadrilatère articulé. JP3742016 enseigne un dispositif d'ouverture automatique d'une porte coulissante par l'intégration d'un rail sur une porte, le long duquel le système à quadrilatère est destiné à coulisser. US5921613 enseigne un dispositif d'articulation d'une porte coulissante consistant en l'intégration d'un rail sur une caisse, le long duquel le système à quadrilatère est destiné à coulisser.

Un véhicule automobile comprend des portes d'accès au sein d'un habitacle. En cas de véhicule de type fourgon ou « monospace », au moins une porte latérale est généralement montée coulissante. Le mouvement d'une telle porte se fait entre une position fermée dans laquelle la porte obstrue une ouverture et une position ouverte dans laquelle la porte s'étend vers l'arrière face au côté de caisse arrière du côté correspondant pour laisser libre l'accès à l'ouverture. Ainsi, le véhicule comprend généralement un système de support et/ou de guidage de la porte coulissante. Ce système comprend généralement au moins un guide supérieur disposé dans l'ouverture de porte à proximité d'un pavillon et un guide inférieur disposé dans l'ouverture de porte à proximité d'un plancher.

Seulement un tel système engendre un positionnement de la porte en position ouverte contraint par le guidage de porte, en particulier non parallèle au côté de caisse concerné. Ainsi l'encombrement et/ou le positionnement de la porte en position ouverte n'est pas optimal.

Le but de l'invention est de fournir un dispositif de guidage remédiant aux inconvénients ci-dessus et améliorant les dispositifs de l'état de la technique. En particulier, l'invention permet de réaliser un dispositif simple, fiable et peu onéreux.

Pour atteindre cet objectif, l'invention porte sur un dispositif de guidage d'un ouvrant, notamment une porte latérale de véhicule automobile, relativement à une structure de caisse de véhicule automobile, le dispositif de guidage comprenant un système à quadrilatère articulé comprenant des articulations, l'au moins une des articulations comprenant un système à came et suiveur de came.

L'ouvrant est un ouvrant coulissant.

Le dispositif de guidage comprend:
- un rail, notamment un rail fixé à une telle structure de caisse,
- un support d'ouvrant coulissant destiné à être fixé sur un tel ouvrant coulissant,
- un moyen de déplacement coopérant avec le rail de sorte à coulisser par rapport au rail.

Le système à quadrilatère articulé comprend:
- une première bielle comprenant une première articulation entre une première extrémité de la première bielle et le moyen de déplacement, une deuxième articulation entre une deuxième extrémité de la première bielle et le support d'ouvrant coulissant,
- une deuxième bielle comprenant une troisième articulation entre une troisième extrémité de la deuxième bielle et le moyen de déplacement, une quatrième articulation entre une quatrième extrémité de la quatrième bielle et le support d'ouvrant coulissant.

L'au moins une articulation du système à quadrilatère articulé, notamment la troisième articulation, entre au moins une extrémité, notamment la troisième extrémité, de l'au moins une bielle, notamment la deuxième bielle, et le moyen de déplacement, offre un jeu de sorte à permettre une translation de l'au moins une extrémité par rapport au moyen de déplacement lors du passage de l'ouvrant coulissant d'une position fermée à une position ouverte, et vice versa.

Le moyen de déplacement peut comprendre un moyen de réception de l'au moins une extrémité, notamment un moyen de réception de type orifice non circulaire, et/ou le moyen de déplacement peut comprendre un moyen de maintien de l'au moins une extrémité au sein du moyen de réception.

L'au moins une articulation peut comprendre :
- le moyen de réception de l'au moins une extrémité,
- l'au moins une extrémité,
l'au moins une extrémité coopérant avec le moyen de réception, la came du système à came étant rappelée contre le suiveur de came.

Le système à came peut comprendre un moyen élastique, notamment au moins un ressort, notamment au moins un ressort hélicoïdal, de rappel de la came et du suiveur de came l'un contre l'autre.

L'invention porte encore sur un a gencement pour maintenir et guider un ouvrant coulissant par rapport à une structure de caisse, notamment de véhicule automobile, l'agencement comprenant :
- une structure de caisse dotée d'une ouverture, notamment une ouverture latérale,
- un ouvrant coulissant par rapport à la structure de caisse, notamment une porte latérale coulissant longitudinalement ou sensiblement longitudinalement, l'ouvrant coulissant étant apte à se déplacer entre une position fermée dans laquelle l'ouvrant coulissant empêche un accès par l'ouverture et une position d'ouverture, notamment une position d'ouverture intermédiaire dans laquelle l'ouvrant coulissant est décalé de l'ouverture selon une direction transversale ou sensiblement transversale, l'ouvrant coulissant étant apte à se déplacer de la position fermée à la position d'ouverture dans laquelle l'ouvrant coulissant offre un accès par l'ouverture, notamment un accès maximum par l'ouverture, l'agencement comprenant :
   - un dispositif de guidage d'un ouvrant coulissant tel que défini précédemment, notamment un dispositif de guidage agencé au niveau inférieur de l'ouverture, notamment au niveau d'un bavolet, et/ou au niveau inférieur de l'ouvrant coulissant, l'au moins une extrémité se translatant selon la direction transversale ou sensiblement transversale,
   - un moyen de maintien et de guidage de l'ouvrant coulissant par rapport à la structure de caisse, notamment un moyen de maintien et de guidage agencé au niveau supérieur de l'ouverture et/ou au niveau supérieur de l'ouvrant coulissant.

L'invention porte encore sur une structure de caisse de véhicule automobile comprenant au moins un agencement tel que défini précédemment et/ou au moins un dispositif tel que défini précédemment.

L'invention porte encore sur un véhicule, notamment un véhicule automobile, comprenant une structure de caisse telle que définie précédemment et/ou un agencement tel que défini précédemment et/ou un dispositif de guidage tel que défini précédemment.

L'invention porte encore sur un procédé de fonctionnement d'un dispositif de guidage tel que défini précédemment ou d'un agencement tel que défini précédemment ou d'une structure de caisse telle que définie précédemment ou d'un véhicule tel que défini précédemment, le procédé comprenant une phase d'ouverture de l'ouvrant, notamment de l'ouvrant coulissant, incluant un dépliage du système à quadrilatère articulé entraînant un déplacement ou une translation de l'au moins une extrémité d'une bielle du système à quadrilatère dans un premier sens, notamment selon une direction transversale ou sensiblement transversale opposée à l'ouvrant, et/ou une phase de fermeture de l'ouvrant, notamment de l'ouvrant coulissant, incluant un pliage du système à quadrilatère articulé entraînant un déplacement ou une translation de l'au moins une extrémité d'une bielle du système à quadrilatère dans un deuxième sens, notamment selon une direction transversale ou sensiblement transversale vers l'ouvrant.

Les figures annexées représentent, à titre d'exemple, un mode de réalisation d'un véhicule.
La figure 1 est une vue schématique de côté d'un véhicule automobile selon un mode de réalisation de l'invention.
La figure 2 est une vue de côté d'un agencement selon un mode de réalisation de l'invention, une porte latérale coulissante étant en position fermée.
La figure 3 est une vue de côté de l'agencement selon le mode de réalisation de l'invention, la porte latérale coulissante étant en position ouverte.
La figure 4 est une vue en perspective d'un dispositif de guidage selon un mode de réalisation de l'invention.
La figure 5 est une vue de dessous du dispositif de guidage selon le mode de réalisation de l'invention.
Les figures 6 et 7 sont des vues en perspective du dispositif de guidage selon le mode de réalisation de l'invention.
La figure 8 est une vue de dessus du dispositif de guidage selon le mode de réalisation de l'invention.
La figure 9 est une vue de détail de dessus du dispositif de guidage selon le mode de réalisation de l'invention.
La figure 10 est une vue de détail en coupe selon un plan C longitudinal et transversal du dispositif de guidage selon le mode de réalisation de l'invention.
La figure 11 est une autre vue de détail en coupe selon un plan A transversal et vertical du dispositif de guidage selon le mode de réalisation de l'invention.
Les figures 12A et 12 B sont des vues de détail de dessus du dispositif de guidage selon le mode de réalisation de l'invention.
La figure 13A est une vue en coupe selon le plan A du dispositif de guidage selon le mode de réalisation de l'invention.
La figure 13B est une vue en coupe selon un plan B transversal et vertical du dispositif de guidage selon le mode de réalisation de l'invention.
Les figures 14A et 14B sont d'autres vues de détail de dessus du dispositif de guidage selon le mode de réalisation de l'invention.
La figure 15A est une section selon le plan A d'un détail du dispositif de guidage selon le mode de réalisation de l'invention.
La figure 15B est une section selon le plan B d'un détail du dispositif de guidage selon le mode de réalisation de l'invention.

La direction selon laquelle le véhicule se déplace en ligne droite est définie comme étant la direction longitudinale X. Par convention, la direction perpendiculaire à la direction longitudinale X, située dans un plan sensiblement parallèle au sol, est nommée direction transversale Y. La troisième direction, perpendiculaire aux deux autres, est nommée direction verticale Z.

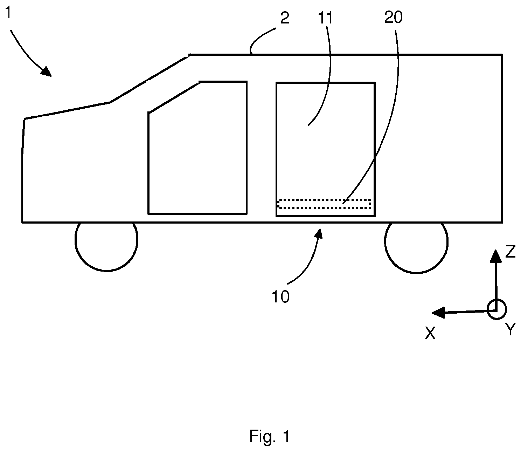

La figure 1 illustre un véhicule automobile 1, par exemple de type fourgon ou « monospace ». Le véhicule automobile 1 comprend une structure de caisse 2. Le véhicule automobile 1 comprend un ouvrant, de préférence un ouvrant coulissant de type porte latérale arrière 11, se déplaçant par rapport à la structure de caisse 2, côté conducteur et/ou côté passager. La porte latérale arrière 11 coulisse longitudinalement ou sensiblement longitudinalement. Evidemment, le véhicule automobile 1 peut comprendre davantage de portes latérales coulissantes, côté conducteur et/ou côté passager.

Le véhicule automobile 1 selon le mode de réalisation comprend de plus un agencement 10 au niveau de la porte latérale arrière coulissante 11 destiné à maintenir et guider la porte latérale arrière coulissante 11. A noter qu'un tel agencement peut être implémenté au niveau de toute autre porte coulissante du véhicule automobile 1. Par commodité, dans la suite, la porte latérale arrière coulissante 11 est nommée porte 11.

Ainsi, l'agencement 10 concernant la porte 11 comprend la structure de caisse 2 dotée d'une ouverture, en particulier une ouverture latérale 12 et la porte 11. De préférence, la porte 11 coulisse par rapport à la structure caisse 2 en direction de l'arrière pour s'ouvrir, longitudinalement ou sensiblement longitudinalement. La porte 11 coulisse alors par rapport à la structure de caisse 2 en direction de l'avant pour se fermer. Selon une variante de réalisation, la porte et la structure de caisse sont agencées pour que la porte s'ouvre en direction de l'avant et que la porte se ferme en direction de l'arrière.

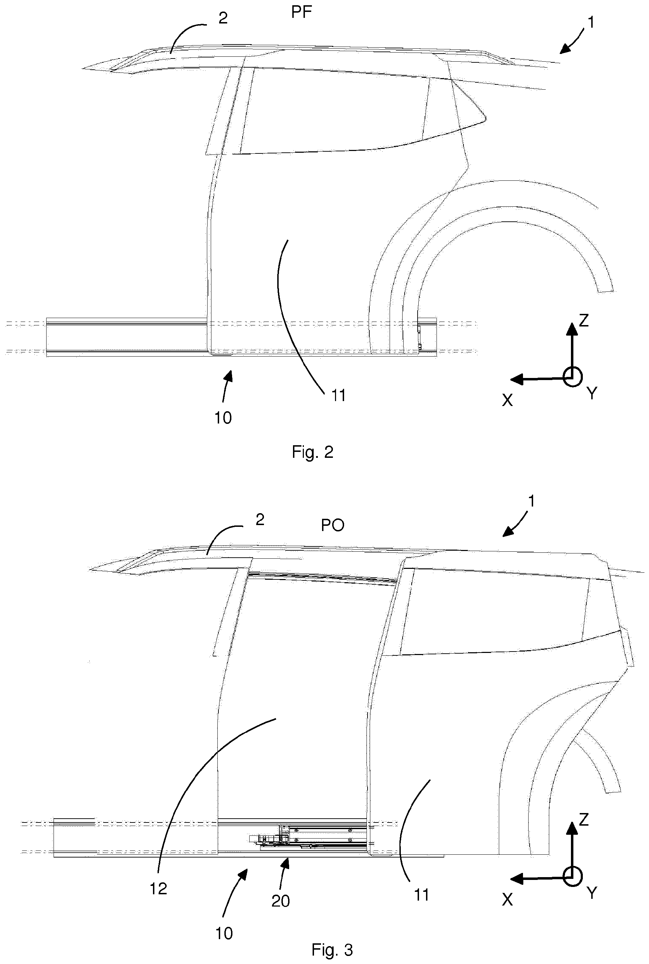

Comme illustré sur les figures 2 et 3, de préférence, la porte 11 se déplace entre une position fermée PF dans laquelle la porte 11 empêche un accès par l'ouverture 12 et une position d'ouverture PO dans laquelle la porte 11 offre un accès par l'ouverture 12, par exemple un accès maximum. De préférence encore, la porte 11 a une position d'ouverture intermédiaire POI dans laquelle la porte 11 est décalée de l'ouverture 12 selon une direction transversale ou sensiblement transversale.

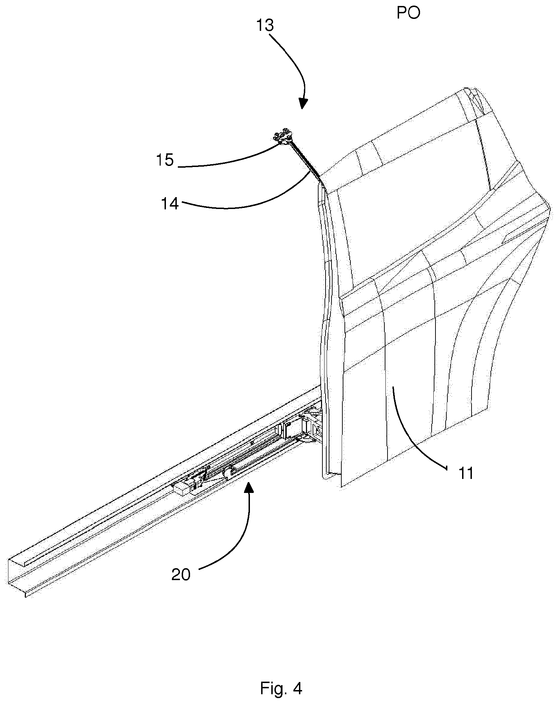

L'agencement 10 comprend encore un dispositif 20 de guidage de la porte 11 relativement à la structure de caisse 2, par exemple un dispositif 20 agencé au niveau inférieur de l'ouverture 12. En effet, ce dispositif 20 est de préférence agencé au niveau d'un bavolet, et/ou au niveau inférieur de la porte 11. Comme illustré sur la figure 4, un moyen 13 de maintien et de guidage de la porte 11 par rapport à la structure de caisse 2 est prévu. De préférence, le moyen 13 de maintien et de guidage est agencé au niveau supérieur de l'ouverture 12 et/ou au niveau supérieur de la porte 11. Le moyen 13 comprend par exemple une biellette 14 et un chariot 15 coopérant avec un rail ou guide (non illustré) fixé au niveau supérieur de l'ouverture 12.

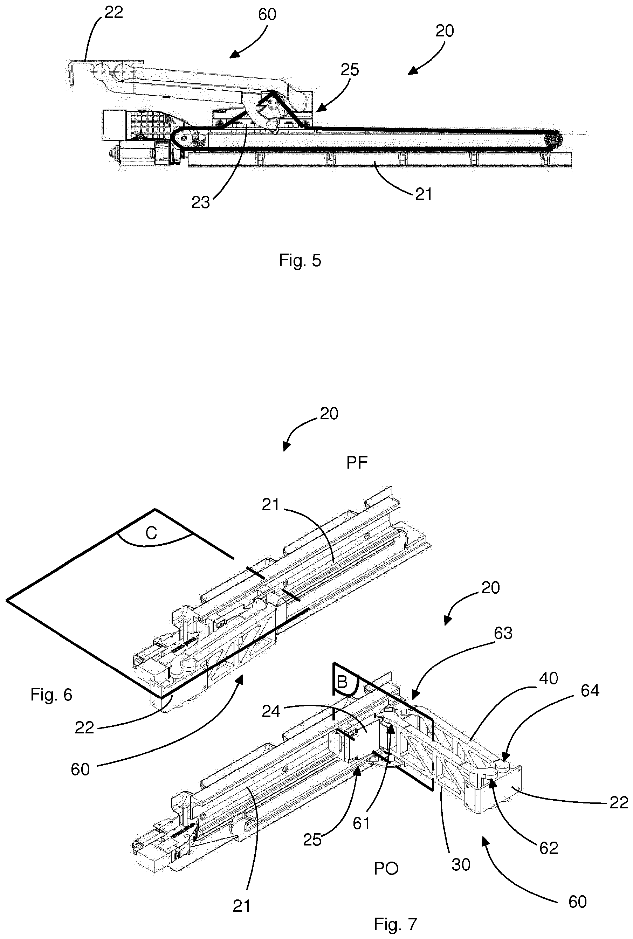

Le dispositif 20 comprend un système à quadrilatère articulé 60 comprenant des articulations, par exemple quatre articulations 61, 62, 63, 64 comme illustré sur les figures 5, 6 et 7.

Au moins une des articulations, de préférence une troisième articulation 63 comme il sera expliqué plus loin, comprend un système à came 65 et suiveur 66 de came. Il faut entendre par là que la troisième articulation 63 est en relation avec un système à came 65 et suiveur 66 de came de sorte que le mouvement de rotation de l'articulation engendre en concomitance un mouvement, notamment en translation, de l'articulation.

En outre, comme illustré sur les figures 5, 6 et 7, le dispositif 20 comprend un rail 21. Le rail 21 est fixé sur la structure de caisse 2. Le dispositif 20 comprend encore un support 22 de porte 11. Le support 22, par exemple en forme de cornière ou équerre, est fixé sur la porte 11. Cette fixation sur la porte 11 est par exemple assurée par des vis et/ou rivets traversant des trous ménagés dans le support 22 et venant s'insérer dans la porte 11, de préférence côté intérieur à l'avant de la porte 11 afin que cette fixation ne soit pas visible. En outre, le dispositif 20 comprend un moyen de déplacement 25 coopérant avec le rail 21 de sorte à coulisser par rapport au rail 21. Le moyen de déplacement 25 comprend par exemple un chariot mobile 23 sur lequel est fixé un boîtier ou navette 24. De préférence, la première articulation 61 et la troisième articulation 63 sont agencées par rapport à la navette 24 du moyen de déplacement 25.

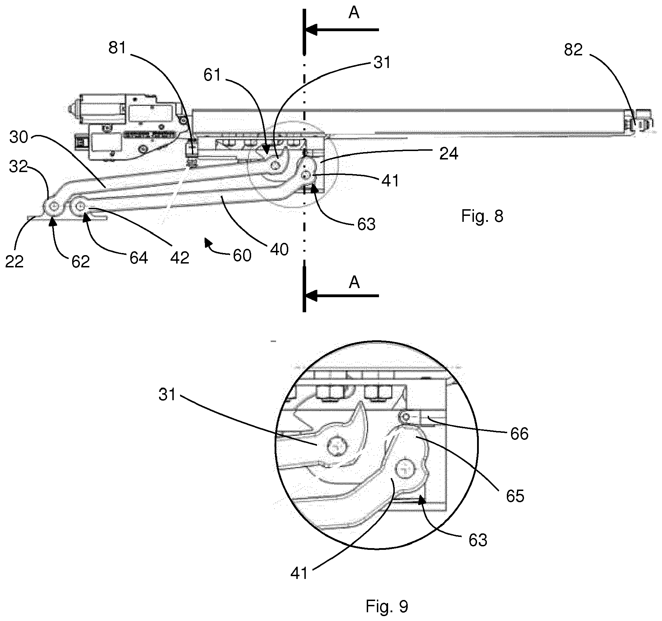

Plus précisément, comme illustré sur les figures 7 et 8, le système à quadrilatère articulé 60 comprend une première bielle 30 et une deuxième bielle 40. Le système à quadrilatère articulé 60 comprend une première articulation 61 entre une première extrémité 31 de la première bielle 30 et le moyen de déplacement 25. Le système à quadrilatère articulé 60 comprend une deuxième articulation 62 entre une deuxième extrémité 32 de la première bielle 30 et le support 22. Le système à quadrilatère articulé 60 comprend une troisième articulation 63 entre une troisième extrémité 41 de la deuxième bielle 40 et le moyen de déplacement 25. Le système à quadrilatère articulé 60 comprend enfin une quatrième articulation 64 entre une quatrième extrémité 42 de la quatrième bielle 40 et le support 22.

Comme évoqué précédemment et illustré sur la figure 9, la troisième articulation 63 du système à quadrilatère articulé 60 entre la troisième extrémité 41 de la deuxième bielle 40 et la navette 24 comprend le système à came 65 et suiveur 66 de came. A noter que le suiveur de came est de préférence une surface de la navette 24, avantageusement une surface s'étendant longitudinalement ou sensiblement longitudinalement. La deuxième bielle 40 effectue ainsi son déplacement en parallèle, ou sensiblement en parallèle, de la première bielle 30, suivant le dessin de la came 65 de la deuxième bielle 40.

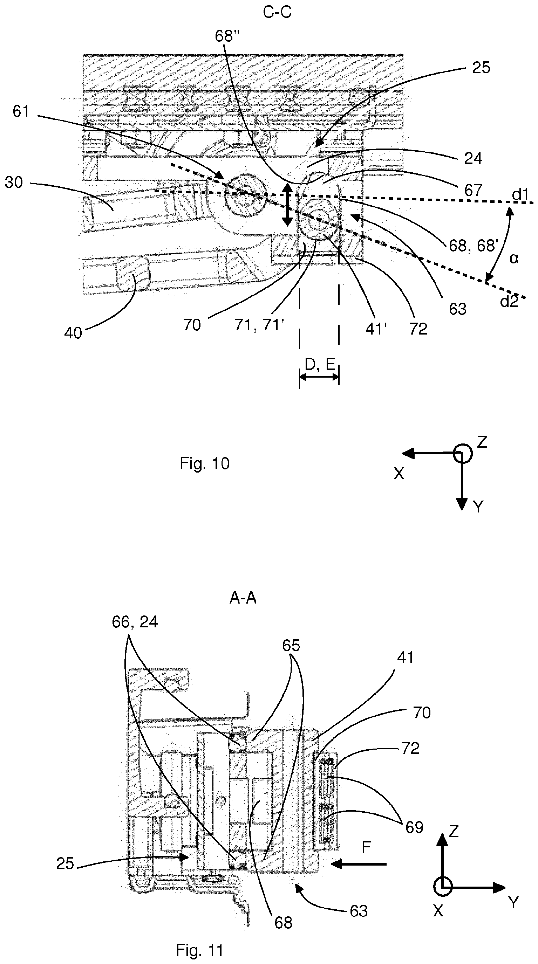

Comme illustré sur la figure 10, la troisième articulation 63 du système à quadrilatère articulé 60 entre la troisième extrémité 41 de la deuxième bielle 40 et la navette 24 offre un jeu 67 de sorte à permettre une translation, ou un déplacement, de la troisième extrémité 41 par rapport à la navette 24. Cette translation, dans un sens, a lieu lors du passage de la position fermée PF de la porte 11 vers la position POI. Lors du passage de la position POI de la porte 11 vers la position fermée PF, la translation a lieu dans le sens opposé comme il sera précisé par la suite.

Ainsi, de préférence la navette 24 comprend un moyen de réception 68 de la troisième extrémité 41, par exemple de type orifice non circulaire, par exemple oblong ou « boutonnière ». En effet, ce moyen de réception 68, par exemple en forme de cavité de type rainure, est ménagée au sein de la navette 24. Autrement dit, dans un plan C longitudinal et transversal, le moyen de réception 68 présente une gorge qui présente avantageusement un arrondi 68" en forme de demi-cylindre de diamètre identique ou sensiblement identique à l'épaisseur E de la gorge. Ainsi, le moyen de réception 68 a une épaisseur E légèrement supérieure à un diamètre D d'un axe 41' de la troisième extrémité 41 de bielle 40 de sorte à laisser libre la rotation de l'axe 41' dans le moyen de réception 68. De préférence, la surface interne 68' du moyen de réception 68 est revêtue d'une matière antifriction, par exemple du téflon et/ou contient du bronze et/ou contient du laiton de manière à limiter l'adhérence entre l'axe 41' et la surface 68'. La surface interne 68' peut aussi être adéquatement lubrifiée pour limiter l'adhérence avec l'axe 41'. Ainsi, comme illustré par la double flèche sur la figure 10, l'axe 41' et par conséquent la troisième extrémité 41 de la deuxième bielle 40 peut se translater transversalement ou sensiblement transversalement.

De préférence encore, la navette 24 comprend un moyen de maintien, par exemple un poussoir mobile 70 destiné à se translater au sein du moyen de réception 68 et venir en appui contre l'axe 41'. Ce poussoir mobile 70 a de préférence une forme apte à pouvoir être guidé au sein du moyen de réception 68. Avantageusement, le poussoir mobile 70 comprend par exemple une encoche cylindrique 71 de diamètre sensiblement égal au diamètre D de l'axe 41'. Comme il sera détaillé par la suite, une surface 71' de cette encoche 71 est au contact en permanence contre l'axe 41'.

Comme illustré sur la figure 11, la troisième articulation 63 comprend le moyen de réception 68 de la troisième extrémité 41 et la troisième extrémité 41. Ainsi, la troisième extrémité 41 coopère avec le moyen de réception 68, la came 65 du système à came étant rappelée contre le suiveur de came 66 par un moyen élastique 69. Ce moyen élastique ou de compression 69 comprend par exemple au moins un ressort, de préférence au moins un ressort hélicoïdal, prenant appui contre un capot 72. Le moyen élastique peut aussi comprendre une lame, par exemple une lame ressort. Le capot 72 est fixé sur la navette 24. Le moyen élastique 69 applique une force F sur le poussoir mobile 70 de sorte que la came 65 reste en permanence au contact du suiveur de came 66. Grâce à ce moyen élastique 69, l'axe 41' est constamment poussé transversalement, ou sensiblement transversalement, vers l'intérieur du véhicule automobile 1, autrement dit vers l'opposé de la porte 11. La came 65 génère une course de translation de l'axe 41' au sein du moyen de réception 68 comprise entre 3 et 10 mm, par exemple 5 mm.

Un mode d'exécution d'un procédé de fonctionnement du dispositif de guidage 20 est décrit ci-après.

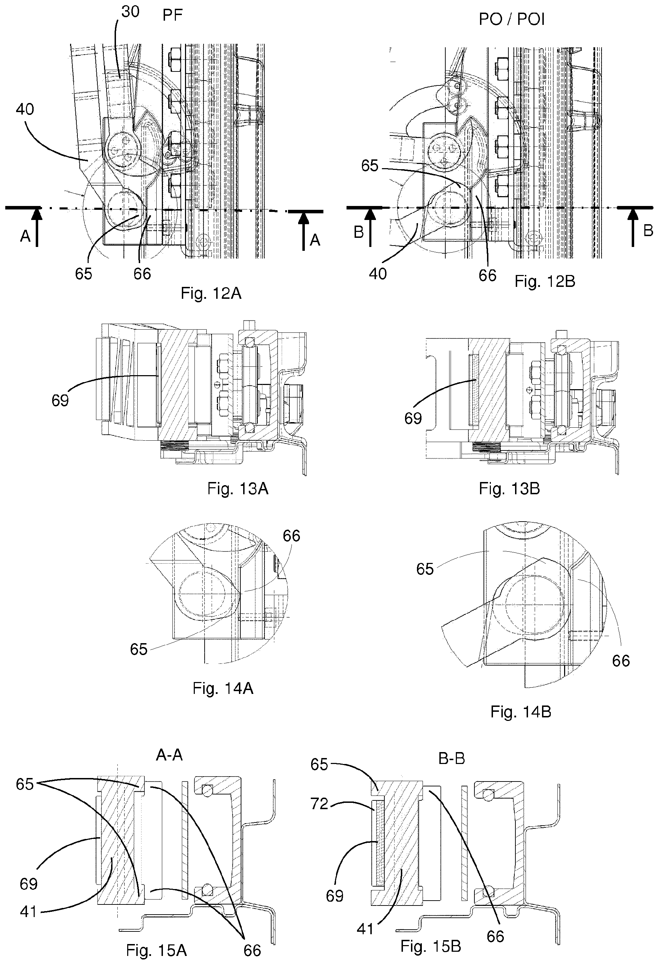

Le mode d'exécution comprend une phase d'ouverture de la porte 11. Cette phase d'ouverture débute alors que la porte 11 est en position fermée PF. Cette position fermée PF au niveau du dispositif de guidage 20 est illustrée en particulier sur les figures 12A, 13A, 14A, 15A. Comme évoqué précédemment, le plan A est vertical et transversal. Le plan A passe, ou passe sensiblement, par l'axe de rotation de l'axe 41' lorsque la porte 11 est fermée. Dans la position fermée PF de la porte 11, la came 65, agencée au niveau de la troisième extrémité 41, éloigne l'axe 41' de l'habitacle. En effet, dans cette position, la came 65 est au contact du suiveur 66 par le biais de son ou ses grands rayons. Ainsi, dans la position fermée PF, l'extrémité 41 est éloignée du rail 21. Le moyen élastique 69 est alors comprimé comme illustré sur la figure 15A. Il en résulte que la porte 11 est correctement plaquée contre la structure de caisse 2 et obstrue parfaitement l'ouverture 12, en particulier grâce à un ou plusieurs joints entre la porte 11 et l'ouverture 12. En effet le système à quadrilatère articulé 60 est alors plié.

La phase d'ouverture de la porte 11 est obtenue par le dépliage du système à quadrilatère articulé 60. Ce dépliage est par exemple engendré par rotation de la première bielle 30 au niveau de la première articulation 61. La rotation de la première bielle 30 engendre, via les articulations du système, la rotation au niveau de la troisième articulation 63 de la troisième extrémité 41. Comme évoqué précédemment, la came 65 étant fixée à la troisième extrémité 41, de préférence sur l'axe 41', la rotation de cette extrémité crée une translation de l'axe 41' vers l'habitacle. La came 65, constamment au contact du suiveur 66, passe alors de son ou ses grands rayons à ses ou son petit rayon, comme illustré sur les figures 12B, 13B, 14B, 15B. Comme évoqué précédemment, le plan B est vertical et transversal. Le plan B passe, ou passe sensiblement, par l'axe de rotation de l'axe 41' lorsque la porte 11 est ouverte, autrement en position POI ou PO ou encore entre ces positions. Dans cette configuration la porte 11 est en position d'ouverture intermédiaire POI, c'est-à-dire décalée ou dégagée transversalement de l'ouverture 12. Le moyen élastique 69 est alors de préférence partiellement détendu comme illustré sur la figure 15B. Autrement dit, le moyen élastique 69 applique une contrainte moindre que celle qu'il applique entre le capot 72 et le poussoir mobile 70 lorsque la came 65 appuie au niveau d'un de ses grands rayons. Le système à quadrilatère articulé 60 est donc déplié. Grâce à ce décalage ou cette translation de l'axe 41' vers l'habitacle, la troisième extrémité 41 est plus proche de l'habitacle ce qui se traduit par un alignement de la porte 11 en position d'ouverture intermédiaire POI. Ainsi la porte 11 est parallèle ou sensiblement parallèle au côté de caisse concerné et/ou s'étend longitudinalement. Le système à quadrilatère articulé demeurant figé au niveau de ses articulations entre la position d'ouverture intermédiaire POI de la porte 11 et la position d'ouverture PO, la porte 11 se translate le long du rail 21 entre la position d'ouverture intermédiaire POI et la position d'ouverture PO tout en restant parallèle ou sensiblement parallèle au côté de caisse.

La phase de fermeture de la porte 11 est obtenue en pliant le système à quadrilatère articulé 60. A noter que la phase de fermeture débute à partir de la position d'ouverture intermédiaire POI, le mécanisme à quadrilatère articulé 60 étant figé entre la position d'ouverture PO et la position d'ouverture intermédiaire POI. La came 65 est alors au contact du suiveur 66 par son ou un de ses petits rayons, l'axe 41' étant alors proche de l'habitacle. Une fois la porte en position d'ouverture intermédiaire POI, la première bielle 30 par exemple coopère avec un élément du rail 21 de sorte à permettre la rotation de la première bielle autour de la première extrémité 31. La rotation de la première extrémité 31 engendre la rotation de la troisième extrémité 41, c'est-à-dire la rotation de la came 65, et par conséquent la translation ou éloignement de l'axe 41' par rapport à l'habitacle. En effet, la came 65 tourne et son contact contre le suiveur 66 évolue de son ou ses petits rayons lorsque la porte 11 est en position d'ouverture intermédiaire POI à son ou ses grands rayons lorsque la porte 11 est en position fermée PF. Le moyen élastique 69 passe quant à lui d'une contrainte faible à une contrainte élevée.

Le système à came permet de moduler la position d'entraxe d'au moins un axe d'un élément du système à quadrilatère, lors de son pliage ou de son dépliage, relativement à un autre élément du système à quadrilatère.

Comme illustré sur la figure 8, une butée ou capteur 81 de fin de course peut être disposé de sorte à identifier précisément l'emplacement du moyen de déplacement 25, en particulier celui de la navette 24, lorsque la porte 11 est en position d'ouverture intermédiaire POI et/ou en position fermée PF. De la même manière, une butée ou capteur 82 de fin de course peut être disposée de sorte à identifier précisément l'emplacement du moyen de déplacement 25, en particulier celui de la navette 24, lorsque la porte 11 est en position ouverte PO.

En résumé, le dispositif de guidage 20 doté du système à quadrilatère articulé 60 complété par la came 65 et le suiveur de came 66 permet de positionner de manière optimale la porte en position ouverte relativement au côté de caisse correspondant. La porte 11, parallèle ou sensiblement parallèle au côté de caisse, peut alors être rapprochée du côté de caisse. Il en résulte un abaissement de l'espace latéral nécessaire à l'ouverture de la porte 11 et un encombrement diminué pour la position d'ouverture intermédiaire et/ou la position d'ouverture PO de la porte 11. Ainsi, la porte n'est plus maintenue inclinée par rapport au côté de caisse.

En effet, comme illustré sur la figure 10, le placement de l'axe de rotation de la première articulation 61 par rapport à l'axe de rotation de la troisième articulation 63 évolue. Lorsque la porte 11 est fermée (cas de la figure 10), une droite d2 passant par les axes des articulations 61, 63 s'écarte d'un angle α par rapport à une droite d1 passant par les axes des articulations 61, 63 lorsque la porte 11 est en position ouverte PO ou en position d'ouverture intermédiaire POI. A noter que la droite d1 est dirigée longitudinalement ou sensiblement longitudinalement. Cet angle α permet une fermeture optimale de la porte 11 dans son embrasure. A l'inverse, lorsque la porte 11 est ouverte, cette mobilité de l'articulation 63 permet un placement de la porte 11 parallèle au côté de caisse.

Plus généralement, la came 65 à section évolutive permet ainsi de résoudre le problème d'inclinaison de la porte 11 en position d'ouverture.

La came 65 permet ainsi de corriger angulairement le système à quadrilatère articulé ou pantographe de sorte à obtenir une position de la porte 11 parallèle à la caisse et limiter l'encombrement de la porte une fois ouverte. A noter qu'un tel dispositif de guidage 20 peut permettre à l'inverse d'augmenter l'angle entre la porte ouverte et le côté de caisse, par exemple en cas de besoin de contourner un galbe prononcé de passage de roue ou encore de pouvoir contourner au moins une roue directrice en position de braquage maximum.

Bien qu'il ait été décrit un agencement 10 doté d'un ouvrant coulissant, l'invention peut être adaptée à un ouvrant s'ouvrant différemment, par exemple pivotant.

En remarque, la solution selon l'invention atteint donc l'objet recherché de permettre un placement optimal d'un ouvrant, notamment un ouvrant coulissant, en particulier le long du côté de caisse face auquel la porte se déplace pour s'ouvrir, et présente les avantages suivants :
- elle comprend peu de pièces ;
- elle peut être adaptée à tout type de véhicule équipé d'au moins une porte latérale, tel que par exemple des poids lourds, des bus, des trains, voire des avions.

## Revendications

1. Dispositif (20) de guidage d'un ouvrant, notamment une porte latérale (11) de véhicule automobile (1), relativement à une structure de caisse (2) de véhicule automobile (1), le dispositif (20) de guidage comprenant un système à quadrilatère articulé (60) comprenant des articulations (61, 62, 63, 64), l'ouvrant est un ouvrant coulissant, le dispositif (20) comprenant :
- un rail (21) fixé à une telle structure de caisse (2),
- un support (22) d'ouvrant coulissant destiné à être fixé sur un tel ouvrant coulissant,
- un moyen de déplacement coopérant avec le rail (21) de sorte à coulisser par rapport au rail (21),
le système à quadrilatère articulé (60) comprend :
- une première bielle (30) comprenant une première articulation (61) entre une première extrémité (31) de la première bielle (30) et le moyen de déplacement, une deuxième articulation (62) entre une deuxième extrémité (32) de la première bielle (30) et le support (22) d'ouvrant coulissant,
- une deuxième bielle (40) comprenant une troisième articulation (63) entre une troisième extrémité (41) de la deuxième bielle (40) et le moyen de déplacement, une quatrième articulation (64) entre une quatrième extrémité (42) de la quatrième bielle (40) et le support (22) d'ouvrant coulissant,
**caractérisé en ce qu'**au moins une des articulations comprend un système à came (65) et suiveur (66) de came, et que l'au moins une articulation du système à quadrilatère articulé (60), notamment la troisième articulation (63), entre au moins une extrémité, notamment la troisième extrémité (41), de l'au moins une bielle, notamment la deuxième bielle (40), et le moyen de déplacement, offre un jeu (67) de sorte à permettre une translation de l'au moins une extrémité par rapport au moyen de déplacement lors du passage de l'ouvrant coulissant d'une position fermée (PF) à une position ouverte (PO), et vice versa.

2. Dispositif (20) selon la revendication 1, **caractérisé en ce que** le moyen de déplacement comprend un moyen de réception (68) de l'au moins une extrémité, notamment un moyen de réception (68) de type orifice non circulaire, et/ou **en ce que** le moyen de déplacement comprend un moyen de maintien de l'au moins une extrémité au sein du moyen de réception (68).

3. Dispositif (20) selon la revendication précédente, **caractérisé en ce que** l'au moins une articulation comprend :
- le moyen de réception (68) de l'au moins une extrémité,
- l'au moins une extrémité,
l'au moins une extrémité coopérant avec le moyen de réception, la came (65) du système à came étant rappelée contre le suiveur de came (66).

4. Dispositif (20) selon l'une des revendications précédentes, **caractérisé en ce que** le système à came (65) comprend un moyen élastique (69), notamment au moins un ressort, notamment au moins un ressort hélicoïdal, de rappel de la came (65) et du suiveur de came (66) l'un contre l'autre.

5. Agencement (10) pour maintenir et guider un ouvrant coulissant par rapport à une structure de caisse (2), notamment de véhicule automobile (1), l'agencement (10) comprenant :
- une structure de caisse (2) dotée d'une ouverture, notamment une ouverture latérale (12),
- un ouvrant coulissant par rapport à la structure de caisse (2), notamment une porte latérale (11) coulissant longitudinalement ou sensiblement longitudinalement, l'ouvrant coulissant étant apte à se déplacer entre une position fermée (PF) dans laquelle l'ouvrant coulissant empêche un accès par l'ouverture et une position d'ouverture (PO), notamment une position d'ouverture intermédiaire (POI) dans laquelle l'ouvrant coulissant est décalé de l'ouverture selon une direction transversale ou sensiblement transversale, l'ouvrant coulissant étant apte à se déplacer de la position fermée (PF) à la position d'ouverture (PO) dans laquelle l'ouvrant coulissant offre un accès par l'ouverture, notamment un accès maximum par l'ouverture,
**caractérisé en ce que** l'agencement (10) comprend :
- un dispositif (20) de guidage d'un ouvrant coulissant selon l'une des revendications 1 à 4, notamment un dispositif (20) agencé au niveau inférieur de l'ouverture, notamment au niveau d'un bavolet, et/ou au niveau inférieur de l'ouvrant coulissant, l'au moins une extrémité se translatant selon la direction transversale ou sensiblement transversale,
- un moyen (13) de maintien et de guidage de l'ouvrant coulissant par rapport à la structure de caisse (2), notamment un moyen (13) de maintien et de guidage agencé au niveau supérieur de l'ouverture et/ou au niveau supérieur de l'ouvrant coulissant.

6. Structure de caisse (2) de véhicule automobile (1), **caractérisée en ce qu'**elle comprend au moins un agencement (10) selon la revendication précédente et/ou au moins un dispositif (20) selon l'une des revendications 1 à 4.

7. Véhicule, notamment véhicule automobile (1), **caractérisé en ce qu'**il comprend une structure de caisse (2) selon la revendication précédente, et/ou un agencement (10) selon la revendication 5 et/ou un dispositif (20) selon l'une des revendications 1 à 4.

8. Procédé de fonctionnement d'un dispositif de guidage (20) selon l'une des revendications 1 à 4 ou d'un agencement (10) selon la revendication 5 ou d'une structure de caisse (2) selon la revendication 6 d'un véhicule selon la revendication 7, **caractérisé en ce qu'**il comprend une phase d'ouverture de l'ouvrant, notamment de l'ouvrant coulissant, incluant un dépliage du système à quadrilatère articulé (60) entraînant un déplacement ou une translation de l'au moins une extrémité d'une bielle du système à quadrilatère (60) dans un premier sens, notamment selon une direction transversale ou sensiblement transversale opposée à l'ouvrant, par le système à came (65) et suiveur (66) de came, et/ou une phase de fermeture de l'ouvrant, notamment de l'ouvrant coulissant, incluant un pliage du système à quadrilatère articulé (60) entraînant un déplacement ou une translation de l'au moins une extrémité d'une bielle du système à quadrilatère dans un deuxième sens, notamment selon une direction transversale ou sensiblement transversale vers l'ouvrant, par le système à came (65) et suiveur (66) de came.

## Patentansprüche

1. Vorrichtung (20) zur Führung eines Öffnungselements, insbesondere einer Seitentür (11) eines Kraftfahrzeugs (1), relativ zu einer Karosseriestruktur (2) eines Kraftfahrzeugs (1), wobei die Vorrichtung (20) zur Führung ein Gelenkvierecksystem (60) umfasst, das Gelenke (61, 62, 63, 64) umfasst, wobei das Öffnungselement ein gleitendes Öffnungselement ist, wobei die Vorrichtung (20) umfasst:
- eine Schiene (21), die an einer solchen Karosseriestruktur (2) befestigt ist,
- einen Träger (22) des gleitenden Öffnungselements, der dazu bestimmt ist, an einem solchen gleitenden Öffnungselement befestigt zu werden,
- ein Verschiebemittel, das mit der Schiene (21) so zusammenwirkt, dass es in Bezug auf die Schiene (21) gleitet,
wobei das Gelenkvierecksystem (60) umfasst:
- eine erste Schubstange (30), die ein erstes Gelenk (61) zwischen einem ersten Ende (31) der ersten Schubstange (30) und dem Verschiebemittel und ein zweites Gelenk (62) zwischen einem zweiten Ende (32) der ersten Schubstange (30) und dem Träger (22) des gleitenden Öffnungselements umfasst,
- eine zweite Schubstange (40), die ein drittes Gelenk (63) zwischen einem dritten Ende (41) der zweiten Schubstange (40) und dem Verschiebemittel und ein viertes Gelenk (64) zwischen einem vierten Ende (42) der zweiten Schubstange (40) und dem Träger (22) des gleitenden Öffnungselements umfasst,
**dadurch gekennzeichnet, dass** wenigstens eines der Gelenke ein System mit Nocken (65) und Nockenfolger (66) umfasst, und dass das wenigstens eine Gelenk des Gelenkvierecksystems (60), insbesondere das dritte Gelenk (63), zwischen wenigstens einem Ende, insbesondere dem dritten Ende (41), der wenigstens einen Schubstange, insbesondere der zweiten Schubstange (40), und dem Verschiebemittel ein Spiel (67) aufweist, so dass es eine Translation des wenigstens einen Endes in Bezug auf das Verschiebemittel bei der Bewegung des gleitenden Öffnungselements aus einer geschlossenen Position (PF) in eine geöffnete Position (PO) und umgekehrt ermöglicht.

2. Vorrichtung (20) nach Anspruch 1, **dadurch gekennzeichnet, dass** das Verschiebemittel ein Aufnahmemittel (68) für das wenigstens eine Ende umfasst, insbesondere ein Aufnahmemittel (68) vom Typ einer nicht kreisförmigen Öffnung, und/oder dadurch, dass das Verschiebemittel ein Mittel zum Halten des wenigstens einen Endes im Inneren des Aufnahmemittels (68) umfasst.

3. Vorrichtung (20) nach dem vorhergehenden Anspruch, **dadurch gekennzeichnet, dass** das wenigstens eine Gelenk umfasst:
- das Aufnahmemittel (68) für das wenigstens eine Ende,
- das wenigstens eine Ende,
wobei das wenigstens eine Ende mit dem Aufnahmemittel zusammenwirkt, wobei der Nocken (65) des Systems mit Nocken gegen den Nockenfolger (66) vorgespannt ist.

4. Vorrichtung (20) nach einem der vorhergehenden Ansprüche, **dadurch gekennzeichnet, dass** das System mit Nocken (65) ein elastisches Mittel (69) umfasst, insbesondere wenigstens eine Feder, insbesondere wenigstens eine Spiralfeder, zum Vorspannen des Nockens (65) und des Nockenfolgers (66) gegeneinander.

5. Anordnung (10) zum Halten und Führen eines in Bezug auf eine Karosseriestruktur (2), insbesondere eines Kraftfahrzeugs (1), gleitenden Öffnungselements, wobei die Anordnung (10) umfasst:
- eine Karosseriestruktur (2) mit einer Öffnung, insbesondere einer seitlichen Öffnung (12),
- ein in Bezug auf die Karosseriestruktur (2) gleitendes Öffnungselement, insbesondere eine in Längsrichtung oder im Wesentlichen in Längsrichtung gleitende Seitentür (11), wobei das gleitende Öffnungselement in der Lage ist, sich zwischen einer geschlossenen Position (PF), in welcher das gleitende Öffnungselement einen Zugang durch die Öffnung verhindert, und einer Öffnungsposition (PO), insbesondere einer Zwischenöffnungsposition (POI), in welcher das gleitende Öffnungselement in einer quer oder im Wesentlichen quer verlaufenden Richtung zur Öffnung versetzt ist, zu bewegen, wobei das gleitende Öffnungselement in der Lage ist, sich aus der geschlossenen Position (PF) in die Öffnungsposition (PO) zu bewegen, in welcher das gleitende Öffnungselement einen Zugang durch die Öffnung bietet, insbesondere einen maximalen Zugang durch die Öffnung,
**dadurch gekennzeichnet, dass** die Anordnung (10) umfasst:
- eine Vorrichtung (20) zur Führung eines gleitenden Öffnungselements nach einem der Ansprüche 1 bis 4, insbesondere eine Vorrichtung (20), die auf einer niedrigeren Höhe der Öffnung angeordnet ist, insbesondere auf der Höhe eines Abschirmbleches, und/oder auf einer niedrigeren Höhe des gleitenden Öffnungselements, wobei das wenigstens eine Ende eine Translation in der quer oder im Wesentlichen quer verlaufenden Richtung ausführt,
- ein Mittel (13) zum Halten und zur Führung des in Bezug auf die Karosseriestruktur (2) gleitenden Öffnungselements, insbesondere ein Mittel (13) zum Halten und zur Führung, das auf einer höheren Höhe der Öffnung und/oder auf einer höheren Höhe des gleitenden Öffnungselements angeordnet ist.

6. Karosseriestruktur (2) eines Kraftfahrzeugs (1), **dadurch gekennzeichnet, dass** sie wenigstens eine Anordnung (10) nach dem vorhergehenden Anspruch und/oder wenigstens eine Vorrichtung (20) nach einem der Ansprüche 1 bis 4 umfasst.

7. Fahrzeug, insbesondere Kraftfahrzeug (1), **dadurch gekennzeichnet, dass** es eine Karosseriestruktur (2) nach dem vorhergehenden Anspruch und/oder eine Anordnung (10) nach Anspruch 5 und/oder eine Vorrichtung (20) nach einem der Ansprüche 1 bis 4 umfasst.

8. Verfahren zum Betrieb einer Vorrichtung zur Führung (20) nach einem der Ansprüche 1 bis 4 oder einer Anordnung (10) nach Anspruch 5 oder einer Karosseriestruktur (2) nach Anspruch 6 eines Fahrzeugs nach Anspruch 7, **dadurch gekennzeichnet, dass** es eine Phase des Öffnens des Öffnungselements, insbesondere des gleitenden Öffnungselements, umfasst, die ein Spreizen des Gelenkvierecksystems (60) beinhaltet, das eine Verschiebung oder eine Translation des wenigstens einen Endes einer Schubstange des Gelenkvierecksystems (60) in einer ersten Richtung, insbesondere in einer quer oder im Wesentlichen quer verlaufenden Richtung vom Öffnungselement weg, durch das System mit Nocken (65) und Nockenfolger (66) zur Folge hat, und/oder eine Phase des Schließens des Öffnungselements, insbesondere des gleitenden Öffnungselements, die ein Zusammenfalten des Gelenkvierecksystems (60) beinhaltet, das eine Verschiebung oder eine Translation des wenigstens einen Endes einer Schubstange des Gelenkvierecksystems in einer zweiten Richtung, insbesondere in einer quer oder im Wesentlichen quer verlaufenden Richtung zum Öffnungselement hin, durch das System mit Nocken (65) und Nockenfolger (66) zur Folge hat.

## Claims

1. Device (20) for guiding a wing, notably a side door (11) of a motor vehicle (1), relative to a body structure (2) of the motor vehicle (1), the guide device (20) comprising an articulated quadrilateral system (60) comprising articulations (61, 62, 63, 64), the wing is a sliding wing, the device (20) comprising:
- a rail (21) fixed to such a body structure (2),
- a sliding wing support (22) intended to be fixed to such a sliding wing,
- a movement means cooperating with the rail (21) so as to slide with respect to the rail (21),
the articulated quadrilateral system (60) comprises:
- a first link (30) comprising a first articulation (61) between a first end (31) of the first link (30) and the movement means, and a second articulation (62) between a second end (32) of the first link (30) and the sliding wing support (22),
- a second link (40) comprising a third articulation (63) between a third end (41) of the second link (40) and the movement means, and a fourth articulation (64) between a fourth end (42) of the fourth link (40) and the sliding wing support (22),
**characterized in that** at least one of the articulations comprises a cam (65) and cam follower (66) system, and **in that** the at least one articulation of the articulated quadrilateral system (60), notably the third articulation (63), provides, between at least one end, notably the third end (41), of the at least one link, notably the second link (40), and the movement means, a clearance (67) so as to allow a movement in translation of the at least one end with respect to the movement means when the sliding wing passes from a closed position (PF) to an open position (PO), and vice versa.

2. Device (20) according to Claim 1, **characterized in that** the movement means comprises a means (68) for receiving the at least one end, notably a receiving means (68) of the non-circular orifice type, and/or **in that** the movement means comprises a means for holding the at least one end within the receiving means (68).

3. Device (20) according to the preceding claim, **characterized in that** the at least one articulation comprises:
- the means (68) for receiving the at least one end,
- the at least one end,
the at least one end cooperating with the receiving means, the cam (65) of the cam system being returned against the cam follower (66).

4. Device (20) according to one of the preceding claims, **characterized in that** the cam (65) system comprises an elastic means (69), notably at least one spring, notably at least one coil spring, for returning the cam (65) and the cam follower (66) against one another.

5. Arrangement (10) for holding and guiding a sliding wing with respect to a body structure (2), notably of a motor vehicle (1), the arrangement (10) comprising:
- a body structure (2) provided with a wing, notably a side wing (12),
- a wing that slides with respect to the body structure (2), notably a side door (11) that slides longitudinally or substantially longitudinally, the sliding wing being able to be moved between a closed position (PF) in which the sliding wing prevents access through the opening and an open position (PO), notably an intermediate open position (POI) in which the sliding wing is offset from the opening in a transverse or substantially transverse direction, the sliding wing being able to be moved from the closed position (PF) to the open position (PO) in which the sliding wing offers access through the opening, notably maximum access through the opening,
**characterized in that** the arrangement (10) comprises:
- a device (20) for guiding a sliding wing according to one of Claims 1 to 4, notably a device (20) arranged at the lower level of the opening, notably at the level of a sill, and/or at the lower level of the sliding wing, the at least one end moving in translation in the transverse or substantially transverse direction,
- a means (13) for holding and guiding the sliding wing with respect to the body structure (2), notably a holding and guiding means (13) arranged at the upper level of the opening and/or at the upper level of the sliding wing.

6. Body structure (2) of a motor vehicle (1), **characterized in that** it comprises at least one arrangement (10) according to the preceding claim and/or at least one device (20) according to one of Claims 1 to 4.

7. Vehicle, notably motor vehicle (1), **characterized in that** it comprises a body structure (2) according to the preceding claim and/or an arrangement (10) according to Claim 5 and/or a device (20) according to one of Claims 1 to 4.

8. Method for operating a guide device (20) according to one of Claims 1 to 4 or an arrangement (10) according to Claim 5 or a body structure (2) according to Claim 6 of a vehicle according to Claim 7, **characterized in that** it comprises a phase of opening the wing, notably the sliding wing, involving folding out the articulated quadrilateral system (60) leading to a movement or a movement in translation of the at least one end of a link of the quadrilateral system (60) in a first direction, notably in a transverse or substantially transverse direction away from the wing, by the cam (65) and cam follower (66) system, and/or a phase of closing the wing, notably the sliding wing, involving folding in the articulated quadrilateral system (60) leading to a movement or a movement in translation of the at least one end of a link of the quadrilateral system in a second direction, notably in a transverse or substantially transverse direction towards the wing, by the cam (65) and cam follower (66) system.
